# EUROPÄISCHE PATENTSCHRIFT

(11) **EP 3 014 194 B1**
(45) Veröffentlichungstag und Bekanntmachung des Hinweises auf die Patenterteilung: **21.04.2021**
(21) Anmeldenummer: 14753191.7
(22) Anmeldetag: 23.06.2014
(51) Int. Cl.: F24H 1/20, F24D 17/00, F24D 19/10, F24H 9/18, F24H 9/20

(54) **ANLAGE ZUR WARMWASSERERZEUGUNG**
DEVICE FOR PRODUCING HOT WATER
DISPOSITIF POUR LA PRODUCTION D'EAU CHAUDE

(30) Priorität: 27.06.2013 AT 5302013
(43) Veröffentlichungstag der Anmeldung: 04.05.2016
(73) Patentinhaber: Rimpler, Gerhard, 4523 Neuzeug (AT)
(72) Erfinder: Rimpler, Gerhard, 4523 Neuzeug (AT)
(74) Vertreter: Ellmeyer, Wolfgang
(86) Internationale Anmeldenummer: PCT/AT2014/050138
(87) Internationale Veröffentlichungsnummer: WO 2014/205468

(56) Entgegenhaltungen:
- EP-A2- 2 402 678
- EP-A2- 2 402 678
- WO-A2-2011/073938
- AU-A4- 2013 100 349
- DE-A1-102008 051 569
- US-A- 4 447 712
- US-A- 5 293 447

## Beschreibung

Die Erfindung betrifft eine Anlage zur Warmwassererzeugung mit einem Warmwasserspeicher und zumindest einem ersten und zumindest einem zweiten Widerstands-Heizstab zur Erwärmung des im Warmwasserspeicher befindlichen Wassers sowie einem Speicher-Temperatursensor und einer Steuereinheit, über welche der zumindest eine erste Widerstands-Heizstab mit einer Netzwechselspannungsquelle verbindbar ist, wobei die Anlage eine Photovoltaikvorrichtung zur Erzeugung einer Gleichspannung umfasst, und wobei die Photovoltaikvorrichtung über die Steuereinheit und gegebenenfalls zumindest eine weitere Steuereinheit mit dem zumindest einen zweiten Widerstands-Heizstab verbunden ist.

Die dezentrale Erzeugung von Energie und deren Einspeisung in öffentliche Netze ist in den letzten Jahren immer mehr in den Mittelpunkt des Interesses gerückt, wobei die Umwandlung von Sonnenstrahlung in Wärme oder elektrische Energie einen hohen Stellenwert erreicht hat, zugleich aber auch starken Schwankungen unterworfen ist, die zu sehr unterschiedlichen Netzauslastungen führen können, wodurch es zu Problemen bei dafür nicht ausgelegten Netzen kommen kann.

Üblicherweise wird bei Photovoltaikanlagen eine Umwandlung der Gleichspannung in eine Wechselspannung vorgenommen, um entweder diverse elektrische Verbraucher oder Geräte betreiben zu können oder die erzeugte Wechselspannung in das öffentliche Netz einzuspeisen.

Obwohl diese Form der Energieabgabe somit für den Anwender viele Vorteile aufweist, setzt die Wechselrichtung der photovoltaisch erzeugten Gleichspannung eine Anlage voraus, die entsprechende Kosten verursacht. Zudem ergeben sich teilweise Umwandlungsverluste.

Auf dem Gebiet der Warmwassererzeugung kann die Sonneneinstrahlung auf sehr vorteilhafte Weise eingesetzt werden, wobei aber Anlagen mit Solarkollektoren in Kombination mit einem Wärmetauscher einen relativ hohen Installationsaufwand erfordern.

Weiters weisen die Solarkollektoren im Gegensatz zu Photovoltaik-Modulen bei niedrigen Umgebungstemperaturen einen schlechten Wirkungsgrad auf.

Die EP 2 402 678 A2 zeigt eine Vorrichtung zur Warmwassererzeugung mit einem Warmwasserspeicher, in dem Wasser durch zwei elektrische Heizkreise erwärmt werden kann. Der erste Heizkreis (laut Anspruch 1) setzt sich zusammen aus einer thermischen Sicherung (TP), einem ersten Thermoschalter (T2) und einem Relais (ST), dessen Kontakt den Photovoltaikstromkreis schließt. Der Photovoltaikstromkreis besteht aus der Gleichspannungsquelle nämlich der Photovoltaikvorrichtung, Klemmen (DC L+ und L-), Relaiskontakt (1, 2) und dem ersten Heizstab (R2). Mit dieser Schaltungsanordnung ist keine Leistungsanpassung zwischen der Photovoltaikvorrichtung und den Heizwiderstand (R2) gegeben. Der zweite Heizkreis (laut Anspruch 2) ergibt sich durch Netzanschluss (L, N, PE), thermische Sicherung (TP), zweiten Thermoschalter (T1) und zweiten Heizstab (R1). Die beiden Heizkreise sind voneinander unabhängig durch den getrennten Stromlauf einerseits und andererseits funktional dadurch, dass der erste und zweite Thermoschalter (T1 und T2) voneinander unabhängig einstellbar sind, wodurch ein erhöhter Aufwand erforderlich ist, um beide Anspeisekreise aufeinander abzustimmen.

Aus der US 4 447 712 geht ein System zur Raumheizung hervor, bei dem mehrere elektrische Widerstandsheizungen verwendet werden, um einen Raum zu beheizen. Eine Photovoltaikvorrichtung dient als Energiequelle, die über eine Steuervorrichtung mit den Widerstandsheizvorrichtungen verbindbar ist. Die Steuervorrichtung enthält dabei für jede Heizvorrichtung jeweils ein steuerbares Schaltelement, mit dem die Heizvorrichtungen mit der Photovoltaikvorrichtung verbindbar sind. Dabei werden die Heizvorrichtungen nacheinander jeweils eine bestimmte Zeit lang mit Energie versorgt. Eine gezielte Umschaltung zwischen Photovoltaikbetrieb und Netzbetrieb ist in diesem Dokument nicht gezeigt.

Aufgabe der Erfindung ist es daher, eine Anlage der eingangs genannten Art anzugeben, die mit relativ einfachen Mitteln und unter Erzielung eines hohen Wirkungsgrades eine Möglichkeit der Zufuhr von elektrischer Energie bietet, die durch Umwandlung von Sonnenenergie erzeugt worden ist.

Weitere Aufgabe der Erfindung ist es, eine Anlage anzugeben, welche eine Nachrüstung von bestehenden Anlagen ohne großen Arbeitsaufwand und eine einfache Steuerung der Anlage ermöglicht.

Erfindungsgemäß wird dies dadurch erzielt, dass der zumindest eine erste Widerstands-Heizstab und die Netzwechselspannungsquelle von dem zumindest einen zweiten Widerstands-Heizstab und der Photovoltaikvorrichtung galvanisch getrennt sind,
- dass der zumindest eine erste und der zumindest eine zweite Widerstands-Heizstab an einem gemeinsamen Befestigungsflansch angebracht sind und eine Heizpatrone ausbilden, die im befestigten Zustand in den Warmwasserspeicher hineinragt, und dass
- die Steuereinheit in einem Gehäuse angeordnet ist, welches vorzugsweise an der Außenseite des Warmwasserspeichers mit dem Befestigungsflansch verbunden ist oder mit diesem einstückig ausgebildet ist.

Voraussetzung für die Umsetzung der Erfindung sind zumindest zwei Widerstands-Heizstäbe, von denen einer mit Netzwechselspannung und der andere mit Gleichstrom aus der photovoltaischen Umwandlung betrieben werden. Da es z.B. Heizwasserboiler gibt, die drei getrennte Heizstäbe für eine Anspeisung über Dreiphasen-Wechselstrom aufweisen, können diese oder eigens dafür hergestellte Heizstäbe verwendet werden. Neben dem Vorsehen einer geeigneten Steuereinheit ist somit nur eine Zuleitung eines zweipoligen Kabels z.B. von dem auf dem Dach befindlichen Photovoltaikelement zu dem Heizstab des Warmwasserspeichers erforderlich. Dies kann mit relativ geringem Aufwand geschehen.

Ein weiterer Vorteil der Erfindung ist die direkte Umsetzung der elektrischen Energie in Wärmeenergie ohne vorherige Wechselrichtung und den damit verbundenen Verlusten. Auf diese Weise kann eine Photovoltaikvorrichtung ohne Wechselrichter im Inselbetrieb geschaltet sein. Die durch Sonnenstrahlung erzeugte Energie wird ausschließlich zur Warmwasseraufbereitung eingesetzt, im Falle eines Überschusses wird dieser nicht in ein Netz eingespeist. Der Einsatz der für die Warmwassererzeugung benötigten Energie, die sich aus sonnenerzeugten und netzgespeisten Teilen zusammensetzt, kann daher sehr gut an den typischen Warmwasserverbrauch des Verbrauchers angepasst werden, wie nachstehend noch erläutert wird.

Es ist erfindungsgemäß einerseits die als Sicherheitsmaßnahme zu erfüllende Trennung von Wechselspannungskreis und Gleichspannungskreis möglich und andererseits eine völlig unabhängige Steuerung der beiden separaten Heizstäbe erzielbar.

Insbesondere können zu diesem Zweck der zumindest eine erste Widerstands-Heizstab, der zumindest eine zweite Widerstands-Heizstab, die Metallummantelung der Widerstands-Heizstäbe und der Befestigungsflansch untereinander isoliert sein.

Dadurch, dass erfindungsgemäß der zumindest eine erste und der zumindest eine zweite Widerstands-Heizstab an einem gemeinsamen Befestigungsflansch angebracht sind und eine Heizpatrone ausbilden, die im befestigten Zustand in den Warmwasserspeicher hineinragt, kann ein in einem Warmwasserspeicher bestehender Heizstab in einfacher Weise durch zwei in erfindungsgemäßer Weise aufgebaute Heizstäbe ersetzt werden.

Weiters ist erfindungsgemäß die Steuereinheit in einem Gehäuse angeordnet, welches vorzugsweise an der Außenseite des Warmwasserspeichers mit dem Befestigungsflansch verbunden oder mit diesem einstückig ausgebildet ist. Eine derartige Anordnung der Steuereinheit in unmittelbarer Nähe zu den Heizstäben bietet den Vorteil des geringen Platzaufwandes, sodass keine Befestigung an oder in einer Wand erfolgen muss und auf eine zusätzliche externe Kabel- oder Drahtführung von den Heizstäben zu der Steuereinheit verzichtet werden kann.

Die Anordnung der Heizstäbe innerhalb des Warmwasserspeichers kann im Rahmen der Erfindung variieren. Sinnvollerweise wird aber der aus der Sonnenenergie erzeugte Strom der Vorheizung des Wassers dienen und die zusätzlich benötigte Energie aus der Netzwechselspannung bezogen werden.

Gemäß einer weiteren Ausführungsform der Erfindung kann der Warmwasserspeicher einen unteren und einen oberen Bereich umfassen, wobei der zumindest eine erste Widerstands-Heizstab so angeordnet ist, dass dieser Wärme im oberen Bereich des Warmwasserspeichers erzeugt und der zumindest eine zweite Widerstands-Heizstab so angeordnet ist, dass dieser Wärme im unteren Bereich des Warmwasserspeichers erzeugt.

Gemäß einer anderen Variante der Erfindung kann vorgesehen sein, dass eine erste Heizpatrone und eine zweite Heizpatrone mit jeweils dem zumindest einen ersten, jeweils dem zumindest einen zweiten Widerstands-Heizstab und jeweils der Steuereinheit bzw. der weiteren Steuereinheit ausgebildet sind, und dass die erste Heizpatrone in einem oberen Bereich des Warmwasserspeichers und die zweite Heizpatrone in einem unteren Bereich des Warmwasserspeichers angeordnet sind, wobei der zumindest eine zweite Widerstands-Heizstab der ersten Heizpatrone und der zumindest eine zweite Widerstands-Heizstab der zweiten Heizpatrone mit der Photovoltaikvorrichtung verbindbar sind, wobei die erste Heizpatrone so angeordnet ist, dass diese Wärme im oberen Bereich des Warmwasserspeichers erzeugt und die zweite Heizpatrone so angeordnet ist, dass diese Wärme im unteren Bereich des Warmwasserspeichers erzeugt. Somit können baugleiche Heizpatronen im oberen und unteren Bereich des Warmwasserspeichers angeordnet sein, wobei die Vorheizung über die Photovoltaikvorrichtung wahlweise im oberen Bereich oder im unteren Bereich erfolgen kann, wodurch bei erforderlicher Nachheizung eine entsprechende bessere Anpassung der Wärmezufuhr vorgenommen werden kann.

In diesem Zusammenhang können in der Steuereinheit oder in der weiteren Steuereinheit eine Detektionseinheit vorgesehen sein, die konfiguriert ist, die Ausgangsspannung der Photovoltaikvorrichtung zu überwachen und durch Auswertung derselben zu bestimmen, dass der zumindest eine zweite Widerstands-Heizstab der zweiten Heizpatrone angeschlossen ist, wobei die Steuereinheit und die weitere Steuereinheit gesteuerte Schalter aufweisen und diese ansteuerbar sind, um Solarstrom aus der Photovoltaikvorrichtung prioritiv in den zumindest einen zweiten Widerstands-Heizstab der oberen ersten Heizpatrone zu leiten und erst dann in den unteren zumindest einen zweiten Widerstands-Heizstab der zweiten Heizpatrone zu leiten, und die Steuereinheit ferner Schalter aufweist, die ansteuerbar sind, um gegebenenfalls über den zumindest einen ersten Widerstands-Heizstab der ersten Heizpatrone (90) mittels der Wechselstromversorgung nachzuheizen. Auf diese Weise erfolgt die Regelung der so erzielten automatischen Schichtladung ausschließlich über die gemeinsame Gleichspannungsleitung des jeweils zweiten Widerstands-Heizstabes der beiden Heizpatronen ohne zusätzliche Kommunikationsschnittstellen zwischen den Heizstäben.

Über die Steuereinheit wird die Zufuhr der Energie aus der Umwandlung der Sonnenstrahlung einerseits und aus der Netz-Wechselspannung andererseits so gesteuert, dass der Anteil der Netz-Wechselspannung möglichst gering gehalten wird, um den Verbrauch an Tarifstrom zu minimieren. Vorheizen durch Photovoltaikstrom und Nachheizen durch Netzwechselstrom können auf diese Weise entsprechend günstig kombiniert werden.

Auf diese Weise erfolgt eine direkte Umsetzung des Photovoltaikstromes in Wärmeenergie, die durch die Heizung mittels Netzstrom ergänzt werden kann.

Zu diesem Zweck kann die Steuereinheit konfiguriert sein, die Netzwechselspannungsquelle innerhalb einer Nachheizzeitspanne über den Schalter mit dem zumindest einen ersten Widerstands-Heizstab zu verbinden, wobei der Beginn und das Ende der Nachheizzeitspanne in Abhängigkeit von der durch die Vorheizzeitspanne erzielten Temperatur im Warmwasserspeicher steuerbar ist.

In weiterer Ausbildung der Erfindung kann die Steuereinheit mit einer Regelschaltung, einer Schaltlogik zur Aufheizung des Warmwasserspeichers entsprechend der Werte des Speicher-Temperatursensors, Schaltelementen und einer Ansteuerung zum Regeln der aus der Photovoltaikvorrichtung und der Netzwechselspannungsquelle gebildeten Anspeisekreise ausgestattet sein.

In besonders bevorzugter Weise kann die Steuereinheit mit einer Regelschaltung ausgestattet sein, die dazu konfiguriert ist, die Leistungsanpassung zwischen der Photovoltaikvorrichtung und dem zumindest einen zweiten Widerstands-Heizstab durch kontinuierliche Auswertung der Strom/Spannungsveränderungen der Photovoltaikvorrichtung und eine davon abhängige Ansteuerung eines Schaltmittels zu maximieren.

Dies kann in bekannter Weise durch MPP-Tracking erfolgen.

Somit kann gemäß weiterer Fortbildung der Erfindung die Steuereinheit jeweils so konfiguriert sein, die Photovoltaikvorrichtung über die gesteuerten Schalter innerhalb einer Vorheizzeitspanne bei Sonneneinstrahlung entweder mit dem zumindest einen zweiten Widerstands-Heizstab der ersten Heizpatrone oder dem zumindest einen zweiten Widerstands-Heizstab der zweiten Heizpatrone zu verbinden, und dass bei Überschreiten einer Maximaltemperatur innerhalb des Warmwasserspeichers die Steuereinheit jeweils so konfiguriert ist, die Verbindung zwischen der Photovoitaikvorrichtung und jeweils dem zumindest einen zweiten Widerstands-Heizstab zu unterbrechen.

Weiters kann die Steuereinheit eine Kommunikationsschnittstelle zur Fernabfrage und/oder Wartung und Anzeigeelemente enthalten, über die eine ortsungebundene Überprüfung oder Kontrolle der erfindungsgemäßen Anlage vorgenommen werden kann.

Die Erfindung betrifft auch ein Verfahren zur Steuerung einer erfindungsgemäßen Anlage, welches darin besteht, dass in der Steuereinheit der Tagesverlauf der Wassertemperatur aufgezeichnet wird, daraus die typische Warmwasserentnahme über den Tag errechnet und entsprechend der typischen Warmwasserentnahme der Warmwasserspeicher vorgeheizt und gegebenenfalls nachgeheizt wird.

In diesem Zusammenhang kann weiters vorgesehen sein, dass der Speicher-Temperatursensor die Wassertemperatur überwacht und bei Überschreitung eines vorgegebenen Temperaturgrenzwertes, insbesondere durch Verkalkung der Heizpatrone, eine Störungsmeldung ausgibt und die Anlage sofort oder erst nach Überschreitung eines zweiten Temperaturgrenzwertes abgeschaltet wird.

Eine weitere Ausbildung des erfindungsgemäßen Verfahrens und der erfindungsgemäßen Anlage kann beinhalten, dass die galvanische Trennung zwischen zwei Anspeisekreisen, die durch die Photovoltaikvorrichtung und durch die Netzwechselspannungsquelle gebildet sind, im Betrieb durch eine Isolationsprüfungsschaltung zwischen dem zumindest einen zweiten Widerstands-Heizstab und dem Erdpotenzial sowie zwischen der Photovoltaikvorrichtung und dem Erdpotenzial überwacht wird und im Falle der Unterschreitung eines vorgegebenen Isolationswiderstandes beide oder nur einer der Anspeisekreise abgeschaltet werden und/oder eine Störungsmeldung über eine Kommunikationsschnittstelle zur Fernabfrage und/oder Wartung und Anzeigeelemente ausgegeben wird.

Nachfolgend wird die Erfindung anhand der in den Zeichnungen dargestellten Ausführungsbeispiele eingehend erläutert. Es zeigt dabei
Fig.1 ein Schaltbild einer Ausführungsform der erfindungsgemäßen Anlage und
Fig.2 eine teilweise aufgebrochene Seitenansicht einer Heizpatrone einer weiteren Ausführungsform der erfindungsgemäßen Anlage;
Fig.3 eine Vorderansicht der Heizpatrone gemäß Fig.2 bei abgenommenem Gehäusedeckel;
Fig.4 eine Seitenansicht der Heizpatrone gemäß Fig. 2;
Fig.5 eine Vorderansicht der Heizpatrone gemäß Fig.2;
Fig.6 eine schematische Darstellung eines Warmwasserspeichers einer weiteren Ausführungsform der erfindungsgemäßen Anlage und
Fig.7 ein Schaltbild einer weiteren Ausführungsform der erfindungsgemäßen Anlage.

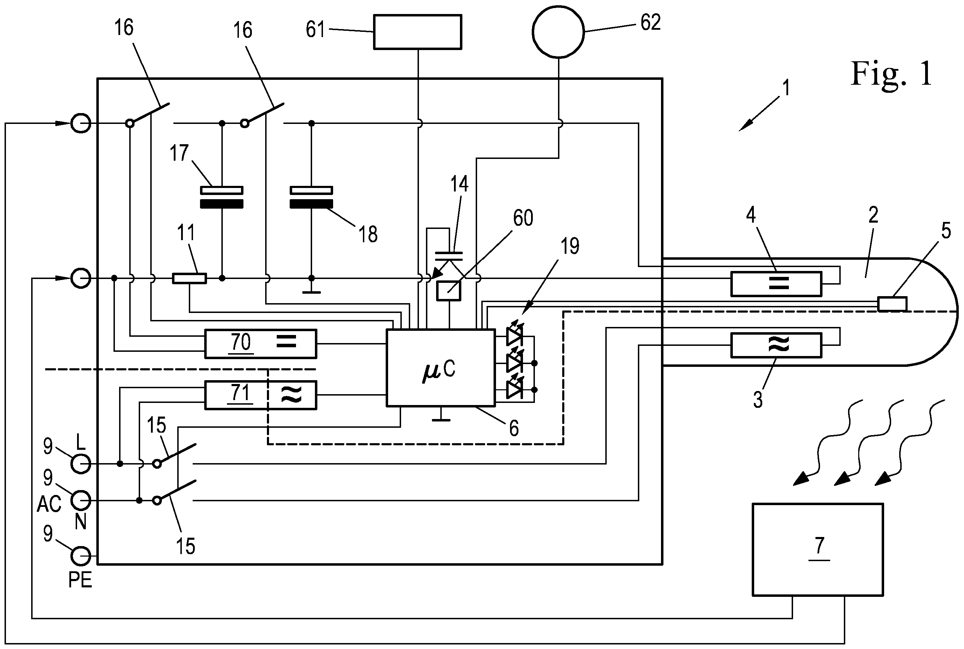

Fig.1 zeigt ein Schaltbild einer Anlage 1 zur Warmwassererzeugung mit einem Warmwasserspeicher 2 und einem ersten und einem zweiten Widerstands-Heizstab 3, 4 zur Erwärmung des im Warmwasserspeicher 2 befindlichen Wassers. Weiters ist ein Speicher-Temperatursensor 5 und eine Steuereinheit 6 mit einer Statusanzeige 19 sowie Ein- und Ausschalter 61 vorgesehen.

Weiters enthält die Steuereinheit 6 eine Kommunikationsschnittstelle 62 zur Fernabfrage und/oder Wartung.

Der erste Widerstands-Heizstab 3 wird über Netzwechselspannung betrieben und ist über zwei Schalter 15, welche über die Steuereinheit 6, z.B. einen Mikro-Controller, gesteuert werden, mit einer Netzwechselspannungsquelle 9 verbindbar.

Erfindungsgemäß umfasst die Anlage 1 eine Photovoltaikvorrichtung zur Erzeugung einer Gleichspannung 7, über welche einfallende Sonnenstrahlung in elektrische Energie umgewandelt wird.

Die Steuereinheit 6 wird je nach Sonneneinstrahlung entweder über eine Gleichstromversorgung 7 oder über eine netzgespeiste Wechselstromversorgung 9 mit Strom versorgt.

Die Photovoltaikvorrichtung 7 wird über gesteuerte Schalter 16, die von der Steuereinheit 6 oder einer weiteren Steuereinheit gesteuert werden, und Kondensatoren 17, 18, welche eine MPP-Anpassung ermöglichen, mit dem zweiten Widerstands-Heizstab 4 verbunden. Der durch den zweiten Widerstands-Heizstab 4 fließende Strom wird dabei über einen Strommesswiderstand 11, der mit der Steuereinheit 6 verbunden ist, und einen Transistor oder andere elektronische Schaltmittel 14 gesteuert.

Der erste Widerstands-Heizstab 3 und die Netzwechselspannungsquelle 9 sind zudem vom zweiten Widerstands-Heizstab 4 galvanisch getrennt.

Die Photovoltaikvorrichtung 7 ist innerhalb einer Vorheizzeitspanne bei Sonneneinstrahlung über die Steuereinheit 6 mit dem zweiten Widerstands-Heizstab 4 so verbunden, dass eine Leistungsanpassung zwischen der Photovoltaikvorrichtung und dem Heizstab gegeben ist.

Die Leistungsanpassung zwischen der Photovoltaik-Vorrichtung 7 und dem zweiten Widerstands-Heizstab 4 erfolgt in der Steuereinheit durch Auswertung der Strom/Spannungskennlinien der Photovoltaikmodule und Regelung zur maximalen Leistungsabgabe der Solarzellen.

Bei Überschreiten einer Maximaltemperatur innerhalb des Warmwasserspeichers 2 wird die Verbindung zwischen der Photovoltaikvorrichtung 7 und dem zweiten Widerstands-Heizstab 4 unterbrochen und die weitere Speisung durch Photovoltaikstrom verhindert.

Der Speicher-Temperatursensor 5 misst und überwacht die Wassertemperatur laufend und gibt die Messwerte an die Steuereinheit 6 weiter. Im Störfall gibt der Speicher-Temperatursensor 5 beispielsweise bei Überschreitung eines vorgegebenen Temperaturgrenzwertes, insbesondere durch Verkalkung der Heizpatrone, eine Störungsmeldung aus, woraufhin die Anlage sofort oder erst nach Überschreitung eines zweiten Temperaturgrenzwertes abgeschaltet wird.

Die Steuereinheit 6 ist mit einer Regelschaltung, einer Schaltlogik zur Aufheizung des Warmwasserspeichers 2 entsprechend der Werte des Speicher-Temperatursensors 5, Schaltelementen und einer Ansteuerung zum Regeln der aus der Photovoltaikvorrichtung 7 und der Netzwechselspannungsquelle 9 gebildeten Anspeisekreise ausgestattet.

Sofern die Steuereinheit 6 eine zu geringe Aufheizung feststellt, wird die Netzwechselspannungsquelle 9 innerhalb einer Nachheizzeitspanne über die Steuereinheit 6 mit dem ersten Widerstands-Heizstab 3 verbunden, wobei der Beginn und das Ende der Nachheizzeitspanne in Abhängigkeit von der durch die Vorheizzeitspanne erzielten Temperatur im Warmwasserspeicher 2 steuerbar ist.

In bevorzugter Weise wird in der Steuereinheit 6 der Tagesverlauf der Wassertemperatur aufgezeichnet, daraus die typische Warmwasserentnahme über den Tag errechnet und entsprechend der typischen Warmwasserentnahme der Warmwasserspeicher 2 vorgeheizt und gegebenenfalls nachgeheizt.

Ferner wird die galvanische Trennung zwischen den Anspeisekreisen 7, 9 im Betrieb durch eine Isolationsprüfungsschaltung in der Steuereinheit zwischen dem zweiten Widerstands-Heizstab 4 bzw. der Photovoltaik-Vorrichtung 7 und Erdpotenzial überwacht und im Falle der Unterschreitung eines vorgegebenen Isolationswiderstandes werden beide oder nur ein Anspeisungskreis 7, 9 abgeschaltet und/oder es wird eine Störungsmeldung ausgegeben.

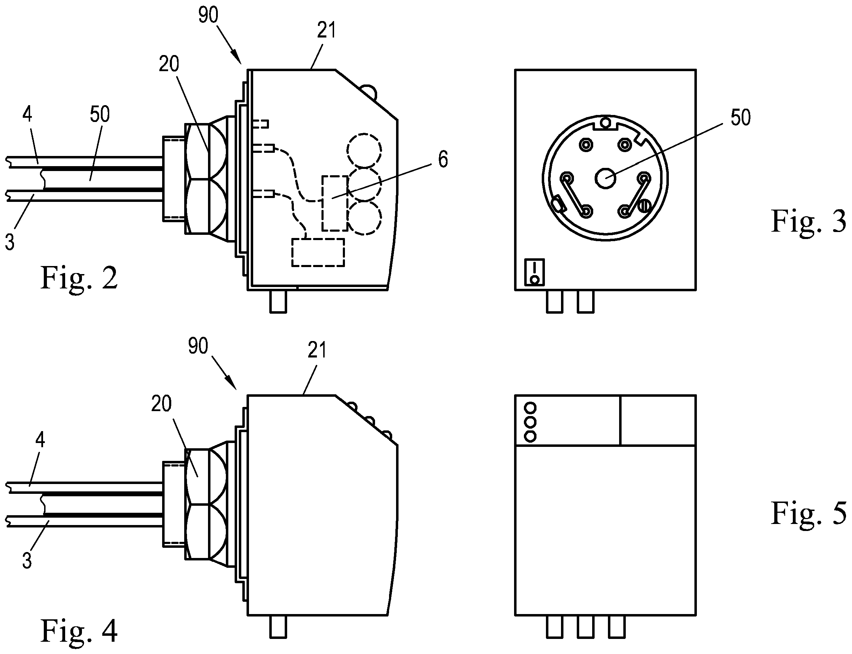

Fig.2 bis 5 zeigen ein weiteres Ausführungsbeispiel, in dem der erste und der zweite Widerstands-Heizstab 3, 4 an einem gemeinsamen Befestigungsflansch 20 angebracht sind und eine Heizpatrone 90 ausbilden, die im befestigten Zustand in den (nicht dargestellten) Warmwasserspeicher hineinragt. Bei dem ersten und dem zweiten Heizstab 3, 4 ist ein Messrohr 50 angeordnet, in welchem der Temperatursensor 5 zur Messung der Wassertemperatur im Inneren des (nicht dargestellten) Warmwasserspeichers aufgenommen ist.

Der erste Widerstands-Heizstab 3, der zweite Widerstands-Heizstab 4, die Metallummantelung der Widerstands-Heizstäbe 3, 4 und der Befestigungsflansch 20 sind untereinander isoliert.

Die Metallummantelungen der Widerstands-Heizstäbe 3, 4 sind direkt oder über einen niederohmigen Widerstand, der hinsichtlich galvanischer Korrosion vorteilhaft ist, mit dem Erdpotential verbunden.

Die Heizpatrone kann mit einem 1,5 Zoll, das heißt 38,1 mm, oder 1,25 Zoll, das heißt 31,75 mm, Gewinde oder über eine 180 mm Flanschplatte oder über andere gängige Befestigungsmittel im Warmwasserspeicher 2 montiert werden.

Die Steuereinheit 6 ist in einem Gehäuse 21 angeordnet, welches an der Außenseite des (nicht dargestellten) Warmwasserspeichers mit dem Befestigungsflansch 20 verbunden ist.

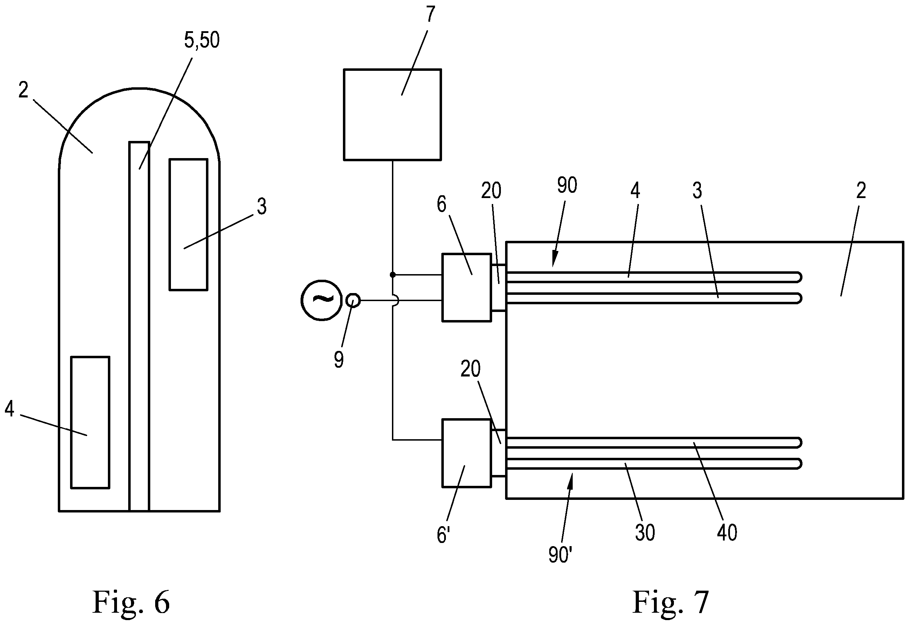

Gemäß dem in Fig. 6 gezeigten Ausführungsbeispiel weist der Warmwasserspeicher 2 einen ausgeprägten unteren und oberen Bereich auf, wobei der erste, netzgespeiste Widerstands-Heizstab 3, so angeordnet ist, dass dieser Wärme im oberen Bereich des Warmwasserspeichers 2 erzeugt und der zweite Widerstands-Heizstab 4, der von der Photovoltaikvorrichtung 7 gespeist wird, so angeordnet ist, dass dieser Wärme im unteren Bereich des Warmwasserspeichers 2 erzeugt.

Grundsätzlich wird die Erwärmung durch den Strom der Photovoltaikvorrichtung 7 angestrebt. Dabei ist ein möglichst hoher Nutzungsgrad der Photovoltaik-Energie anzustreben. Dies kann erreicht werden durch:
1. Sinnvolle Dimensionierung der Photovoltaikvorrichtung 7 im Vergleich zum Speichervolumen des Warmwasserspeichers 2.
2. Intelligente Zu- bzw. Nachheizung durch Netzwechselspannung, die vermeidet, eine zu hohe Speichertemperatur am Tagesbeginn zu haben.
3. Schichtladung, bei der zuerst ein kleiner (oberer) Teil des Warmwasserspeichers 2 erwärmt wird, dann, sofern die Photovoltaik-Vorrichtung 2 Energie liefert, der untere Teil des Warmwasserspeichers 2 erwärmt wird, und, sofern die obere Speichertemperatur nicht ausreicht, durch die Netzwechselspannung zugeheizt wird.
4. Optimierte Leistungsanpassung zwischen Photovoltaik-Vorrichtung 2 und dem zweiten Widerstands-Heizstab 4 durch Regelung entsprechend der Strom/Spannungskennlinien der Photovoltaik-Vorrichtung 2.

Bei der Zuheizung wird nicht nur die Information über die Photovoltaik-Leistung und die zu erreichende Grenztemperatur berücksichtigt, sondern über den Temperatursensor 5 das Verbrauchsverhalten des Nutzers durch die Temperaturveränderungen ermittelt.

Weiters wird über mehrere Tage gemittelte Photovoltaik-Leistung der Sonnengang und die ungefähre Uhrzeit berechnet.

Ergibt sich beispielsweise ein Verbrauchsverhalten, bei dem viel Warmwasser am Abend und wenig am Morgen benötigt wird, so wird am Abend vor dem Verbrauchszeitpunkt zugeheizt und nicht am Morgen. Dadurch ergibt sich über Nacht eine relativ geringere Speichertemperatur und somit geringe Verluste und dadurch eine günstige Ausgangstemperatur für die am nächsten Tag anstehende Erwärmung durch die Photovoltaikvorrichtung 7.

Besteht ein Verbrauchsverhalten eher am Morgen, so wird vor dem Morgenverbrauch zugeheizt, wodurch sich nach dem Morgenverbrauch wiederum eine günstige Ausgangstemperatur für die anstehende Erwärmung durch Photovoltaikstrom ergibt.

Die vorgenannten Ziele können z.B. durch das in Fig.7 gezeigte Ausführungsbeispiel erreicht werden.

Eine erste Heizpatrone 90 ist mit einem ersten Widerstands-Heizstab 3 sowie einem zweiten Widerstands-Heizstab 4 und eine zweite Heizpatrone 90' mit einem ersten Widerstands-Heizstab 30 sowie einem zweiten Widerstands-Heizstab 40 und jeweils einer Steuereinheit 6, 6' ausgebildet.

Die Steuereinheiten 6, 6' sind mit einer Regelschaltung, einer Schaltlogik zur Aufheizung des Warmwasserspeichers 2 entsprechend den Werten des Speicher-Temperatursensors 5, Schaltelementen und einer Ansteuerung zum Regeln der aus der Photovoltaikvorrichtung 7 und der Netzwechselspannungsquelle 9 gebildeten Anspeisekreise ausgestattet.

Ferner sind die Steuereinheiten 6, 6' mit einer Regelschaltung ausgestattet, die die Leistungsanpassung zwischen der Photovoltaikvorrichtung 7 und dem zweiten Widerstands-Heizstab 4 durch kontinuierliche Auswertung der Strom/Spannungsveränderungen der Photovoltaikvorrichtung 7 und optimierte Ansteuerung eines Schaltmittels 14 maximiert.

Die erste Heizpatrone 90 ist in einem oberen Bereich des Warmwasserspeichers 2 und die zweite Heizpatrone 90' in einem unteren Bereich des Warmwasserspeichers 2 angeordnet.

Der zweite Widerstands-Heizstab 4 der ersten Heizpatrone 90 und der zweite Widerstands-Heizstab 40 der zweiten Heizpatrone 90' können über die Steuereinheiten 6, 6' mit der Photovoltaikvorrichtung 7 verbunden werden, wobei die erste Heizpatrone 90 so angeordnet ist, dass diese Wärme im oberen Bereich des Warmwasserspeichers 2 erzeugt und die zweite Heizpatrone 90' so angeordnet ist, dass diese Wärme im unteren Bereich des Warmwasserspeichers 2 erzeugt.

Das Vorhandensein der zweiten Heizpatrone 90' kann in der Steuereinheit 6 mit einer nicht dargestellten Detektionseinheit festgestellt werden, welche konfiguriert ist, die Ausgangsspannung der Photovoltaikvorrichtung 7 zu überwachen und durch Auswertung derselben zu bestimmen, dass der zweite Widerstands-Heizstab 40 der zweiten Heizpatrone 90' angeschlossen ist.

Die Steuereinheiten 6, 6' weisen gesteuerte Schalter 16 auf und steuern diese an, um Solarstrom aus der Photovoltaikvorrichtung 7 prioritiv in den zweiten Widerstands-Heizstab 4 der oberen ersten Heizpatrone 90 zu leiten und erwärmt dadurch eine obere Wasserschicht im Warmwasserspeicher. Erst nachrangig wird der Solarstrom aus der Photovoltaikvorrichtung 7 in den unteren zweiten Widerstands-Heizstab 40 der zweiten Heizpatrone 90' geleitet.

Ferner weist die Steuereinheit 6 Schalter 15 auf, die ansteuerbar sind, um gegebenenfalls über den ersten Widerstands-Heizstab 3 der ersten Heizpatrone 90 mittels der Wechselstromversorgung 9 nachzuheizen.

Die Photovoltaikvorrichtung 7 ist somit innerhalb einer Vorheizzeitspanne bei Sonneneinstrahlung über die gesteuerten Schalter 16 der Steuereinheit 6, 6' entweder mit dem zweiten Widerstands-Heizstab 4 der ersten Heizpatrone 90 oder dem zweiten Widerstands-Heizstab 40 der zweiten Heizpatrone 90' verbunden, wobei bei Überschreiten einer Maximaltemperatur innerhalb des Warmwasserspeichers 2 die Verbindung zwischen der Photovoltaikvorrichtung 7 und dem zweiten Widerstands-Heizstab 4 unterbrochen wird.

Falls ein Nachheizen über die Wechselstromversorgung 9 erforderlich oder die obere Solltemperatur bereits erreicht ist, wird der Strom aus der Photovoltaikvorrichtung 7 in den unteren zweiten Widerstands-Heizstab 40 der zweiten Heizpatrone 90' geleitet und dort eine untere Wasserschicht erwärmt. Zugleich wird über den ersten Widerstands-Heizstab 3 der ersten Heizpatrone 90 mittels der Wechselstromversorgung 9 nachgeheizt, wobei die Netzwechselspannungsquelle 9 innerhalb der Nachheizzeitspanne über die Steuereinheit 6 mit dem ersten Widerstands-Heizstab 3 der ersten Heizpatrone 90 verbunden ist, und wobei der Beginn und das Ende der Nachheizzeitspanne in Abhängigkeit von der durch die Vorheizzeitspanne erzielten Temperatur im Warmwasserspeicher 2 steuerbar ist.

## Patentansprüche

1. Anlage (1) zur Warmwassererzeugung mit einem Warmwasserspeicher (2) und zumindest einem ersten und zumindest einem zweiten Widerstands-Heizstab (3, 30, 4, 40) zur Erwärmung des im Warmwasserspeicher (2) befindlichen Wassers sowie einem Speicher-Temperatursensor (5) und einer Steuereinheit (6), über welche der zumindest eine erste Widerstands-Heizstab (3) mit einer Netzwechselspannungsquelle (9) verbindbar ist, wobei die Anlage (1) eine Photovoltaikvorrichtung zur Erzeugung einer Gleichspannung (7) umfasst, und wobei die Photovoltaikvorrichtung (7) über die Steuereinheit (6) und gegebenenfalls zumindest eine weitere Steuereinheit (6') mit dem zumindest einen zweiten Widerstands-Heizstab (4, 40) verbunden ist, wobei der zumindest eine erste Widerstands-Heizstab (3, 30) und die Netzwechselspannungsquelle (9) von dem zumindest einen zweiten Widerstands-Heizstab (4, 40) und der Photovoltaikvorrichtung (7) galvanisch getrennt sind, **dadurch gekennzeichnet, dass** der zumindest eine erste und der zumindest eine zweite Widerstands-Heizstab (3, 4) an einem gemeinsamen Befestigungsflansch (20) angebracht sind und eine Heizpatrone (90) ausbilden, die im befestigten Zustand in den Warmwasserspeicher hineinragt, und dass
- die Steuereinheit (6) in einem Gehäuse (21) angeordnet ist, welches vorzugsweise an der Außenseite des Warmwasserspeichers mit dem Befestigungsflansch (20) verbunden ist oder mit diesem einstückig ausgebildet ist.

2. Anlage nach Anspruch 1, **dadurch gekennzeichnet, dass** der Warmwasserspeicher (2) einen unteren und einen oberen Bereich umfasst, wobei der zumindest eine erste Widerstands-Heizstab (3) so angeordnet ist, dass dieser Wärme im oberen Bereich des Warmwasserspeichers (2) erzeugt und der zumindest eine zweite Widerstands-Heizstab (4) so angeordnet ist, dass dieser Wärme im unteren Bereich des Warmwasserspeichers (2) erzeugt.

3. Anlage nach Anspruch 1 oder 2, **dadurch gekennzeichnet, dass** eine erste Heizpatrone (90) und eine zweite Heizpatrone (90') mit jeweils dem zumindest einen ersten (3, 30), jeweils dem zumindest einen zweiten (4, 40) Widerstands-Heizstab und jeweils der Steuereinheit bzw. der weiteren Steuereinheit (6, 6') ausgebildet sind, und dass die erste Heizpatrone (90) in einem oberen Bereich des Warmwasserspeichers (2) und die zweite Heizpatrone (90') in einem unteren Bereich des Warmwasserspeichers (2) angeordnet sind, wobei der zumindest eine zweite Widerstands-Heizstab (4) der ersten Heizpatrone (90) und der zumindest eine zweite Widerstands-Heizstab (40) der zweiten Heizpatrone (90') mit der Photovoltaikvorrichtung (7) verbindbar sind, wobei die erste Heizpatrone (90) so angeordnet ist, dass diese Wärme im oberen Bereich des Warmwasserspeichers (2) erzeugt und die zweite Heizpatrone (90') so angeordnet ist, dass diese Wärme im unteren Bereich des Warmwasserspeichers (2) erzeugt.

4. Anlage nach Anspruch 3, **dadurch gekennzeichnet, dass** in der Steuereinheit (6) oder in der weiteren Steuereinheit (6') eine Detektionseinheit vorgesehen ist, die konfiguriert ist, die Ausgangsspannung der Photovoltaikvorrichtung (7) zu überwachen und durch Auswertung derselben zu bestimmen, dass der zumindest eine zweite Widerstands-Heizstab (40) der zweiten Heizpatrone (90') angeschlossen ist, wobei die Steuereinheit (6) und die weitere Steuereinheit (6') gesteuerte Schalter (16) aufweisen und diese ansteuerbar sind, um Solarstrom aus der Photovoltaikvorrichtung (7) prioritiv in den zumindest einen zweiten Widerstands-Heizstab (4) der oberen ersten Heizpatrone (90) zu leiten und erst dann in den unteren zumindest einen zweiten Widerstands-Heizstab (40) der zweiten Heizpatrone (90') zu leiten, und die Steuereinheit (6) ferner Schalter (15) aufweist, die ansteuerbar sind, um gegebenenfalls über den zumindest einen ersten Widerstands-Heizstab (3) der ersten Heizpatrone (90) mittels der Wechselstromversorgung (9) nachzuheizen.

5. Anlage nach Anspruch 3 oder 4, **dadurch gekennzeichnet, dass** die Steuereinheit (6) und die weitere Steuereinheit (6') konfiguriert sind, die Photovoltaikvorrichtung (7) über die gesteuerten Schalter (16) innerhalb einer Vorheizzeitspanne bei Sonneneinstrahlung entweder mit dem zumindest einen zweiten Widerstands-Heizstab (4) der ersten Heizpatrone (90) oder dem zumindest einen zweiten Widerstands-Heizstab (40) der zweiten Heizpatrone (90') zu verbinden, und dass bei Überschreiten einer Maximaltemperatur innerhalb des Warmwasserspeichers (2) die Steuereinheit (6) und/oder die weitere Steuereinheit (6') konfiguriert sind, die Verbindung zwischen der Photovoltaikvorrichtung (7) und jeweils dem zumindest einen zweiten Widerstands-Heizstab (4, 40) zu unterbrechen.

6. Anlage nach einem der Ansprüche 1 bis 5, **dadurch gekennzeichnet, dass** die Steuereinheit (6) konfiguriert ist, die Netzwechselspannungsquelle (9) innerhalb einer Nachheizzeitspanne über den Schalter (15) mit dem zumindest einen ersten Widerstands-Heizstab (3) zu verbinden, wobei der Beginn und das Ende der Nachheizzeitspanne in Abhängigkeit von der durch die Vorheizzeitspanne erzielten Temperatur im Warmwasserspeicher (2) steuerbar ist.

7. Anlage nach einem der Ansprüche 1 bis 6, **dadurch gekennzeichnet, dass** die Steuereinheit (6, 6') mit einer Regelschaltung, einer Schaltlogik zur Aufheizung des Warmwasserspeichers (2) entsprechend der Werte des Speicher-Temperatursensors (5), Schaltelementen und einer Ansteuerung zum Regeln der aus der Photovoltaikvorrichtung (7) und der Netzwechselspannungsquelle (9) gebildeten Anspeisekreise ausgestattet ist.

8. Anlage nach einem der Ansprüche 1 bis 7, **dadurch gekennzeichnet, dass** die Steuereinheit (6) mit einer Regelschaltung ausgestattet ist, die dazu konfiguriert ist, die Leistungsanpassung zwischen der Photovoltaikvorrichtung (7) und dem zumindest einen zweiten Widerstands-Heizstab (4) durch kontinuierliche Auswertung der Strom/Spannungsveränderungen der Photovoltaikvorrichtung (7) und eine davon abhängige Ansteuerung eines Schaltmittels (14) zu maximieren.

9. Anlage nach einem der Ansprüche 1 bis 8, **dadurch gekennzeichnet, dass** die Steuereinheit (6) eine Kommunikationsschnittstelle (62) zur Fernabfrage und/oder Wartung und Anzeigeelemente (19) enthält.

10. Anlage nach einem der Ansprüche 1 bis 9, **dadurch gekennzeichnet, dass** jeweils der zumindest eine erste Widerstands-Heizstab (3, 30), der zumindest eine zweite Widerstands-Heizstab (4, 40), die Metallummantelung der Widerstands-Heizstäbe (3, 30, 4, 40) und der Befestigungsflansch (20) untereinander isoliert sind.

11. Anlage nach einem der vorhergehenden Ansprüche, **dadurch gekennzeichnet, dass** die Heizpatrone mit einem 1,5 Zoll (38,1 mm) oder 1,25 Zoll (31,75 mm) Gewinde oder über eine 180 mm Flanschplatte im Warmwasserspeicher (2) montiert wird.

12. Verfahren zur Steuerung einer Anlage nach einem der Ansprüche 1 bis 11, wobei in der Steuereinheit (6, 6) der Tagesverlauf der Wassertemperatur aufgezeichnet wird, daraus die typische Warmwasserentnahme über den Tag errechnet und entsprechend der typischen Warmwasserentnahme der Warmwasserspeicher (2) vorgeheizt und gegebenenfalls nachgeheizt wird.

13. Verfahren nach Anspruch 12, **dadurch gekennzeichnet, dass** der Speicher-Temperatursensor (5) die Wassertemperatur überwacht und bei Überschreitung eines vorgegebenen Temperaturgrenzwertes, insbesondere durch Verkalkung der Heizpatrone, eine Störungsmeldung ausgibt und die Anlage sofort oder erst nach Überschreitung eines zweiten Temperaturgrenzwertes abgeschaltet wird.

14. Verfahren zur Steuerung einer Anlage nach Anspruch 1 bis 11, wobei die galvanische Trennung zwischen zwei Anspeisekreisen, die durch die Photovoltaikvorrichtung (7) und durch die Netzwechselspannungsquelle (9) gebildet sind, im Betrieb durch eine Isolationsprüfungsschaltung zwischen dem zumindest einen zweiten Widerstands-Heizstab (4, 40) und dem Erdpotenzial sowie zwischen der Photovoltaikvorrichtung (7) und dem Erdpotenzial überwacht wird und im Falle der Unterschreitung eines vorgegebenen Isolationswiderstandes beide oder nur einer der Anspeisekreise (7, 9) abgeschaltet werden und/oder eine Störungsmeldung über eine Kommunikationsschnittstelle (62) zur Fernabfrage und/oder Wartung und Anzeigeelemente (19) ausgegeben wird.

## Claims

1. A system (1) for hot water generation, comprising a hot water storage tank (2) and at least one first and at least one second resistive heating rods (3, 30, 4, 40) for heating the water located in the hot water storage tank (2), and a storage tank temperature sensor (5) and a control unit (6) by means of which said at least one first resistive heating rod (3) is connectable with an alternating voltage source (9), wherein said system (1) comprises a photovoltaic device for generating a direct voltage (7) and wherein said photovoltaic device (7) is connectable with said at least one second resistive heating rod (4, 40) through said control unit (6) and optionally at least one further control unit (6'), said at least one first resistive heating rod (3, 30) and said alternating voltage source (9) are galvanically separated from said at least one second resistive heating rod (4, 40) and said photovoltaic device (7),
**characterized in that** said at least one first and said at least one second resistive heating rods (3, 4) are attached to a common attachment flange (20) and form a heating cartridge (90) which, in its attached state, protrudes into the hot water storage tank, and **in that** said control unit (6) is located in a housing (21) which is connected to the attachment flange (20), preferably on the outside of the hot water storage tank, or is integrally formed therewith.

2. The system according to claim 1, **characterized in that** the hot water storage tank (2) comprises a lower and an upper zone, wherein at least one first resistive heating rod (3) is arranged so that it produces heat in the upper zone of the hot water storage tank (2) and said at least one second resistive heating rod (4) is arranged so that it produces heat in the lower zone of the hot water storage tank (2).

3. The system according to claim 1 or claim 2, **characterized in that** one first heating cartridge (90) and one second heating cartridge (90') are formed with at least one first (3, 30), at least one second (4, 40) resistive heating rod each and the control unit and the further control unit (6, 6'), respectively, and **in that** the first heating cartridge (90) is arranged in an upper zone of the hot water storage tank (2) and the second heating cartridge (90') is arranged in a lower zone of the hot water storage tank (2), wherein said at least one second resistive heating rod (4) of the first heating cartridge (90) and said at least one second resistive heating rod (40) of the second heating cartridge (90') being connectable with the photovoltaic device (7), said first heating cartridge (90) being arranged so that it produces heat in the upper zone of the hot water storage tank (90) and the second heating cartridge (90') being arranged so that it produces heat in the lower zone of the hot water storage tank (2).

4. The system according to claim 3, **characterized in that** a detection unit is provided in the control unit (6) or the further control unit (6'), said detection unit being configured to monitor the output voltage of the photovoltaic device (7) and to determine, by evaluating said output voltage, that the at least one second resistive heating rod (40) of the second heating cartridge (90') is connected, wherein the control unit (6) and the further control unit (6') having controlled switches (16) that can be actuated to conduct solar electricity from the photovoltaic device (7) primarily to the at least one second resistive heating rod (4) of the upper first heating cartridge (90) and only then conduct it into the lower at least one second resistive heating rod (40) of the second heating cartridge (90'), and wherein the control unit (6) having further switches (15) that are actuable to optionally provide post-heating by means of the at least one first resistive heating rod (3) of the first heating cartridge (90) and the alternating voltage source (9).

5. The system according to claim 3 or claim 4, **characterized in that** the control unit (6) and the further control unit (6') are configured to connect the photovoltaic device (7), during solar exposure, via the controlled switches (16) either with the at least one second resistive heating rod (4) of the first heating cartridge (90) or with the at least one second resistive heating rod (40) of the second heating cartridge (90') during a pre-heating period, and **in that** the control unit (6) and/or the further control unit (6') is/are configured to interrupt the connection between the photovoltaic device (7) and the respective at least one second resistive heating rod (4, 40) if a maximum temperature within the hot water storage tank (2) is exceeded.

6. The system according to any one of the claims 1 to 5, **characterized in that** the control unit (6) is configured to connect the alternating voltage source (9) via the switch (15) to the at least one first resistive heating rod (3) during a first post-heating period, with the beginning and the end of said post-heating period being controllable depending on the temperature reached in the hot water storage tank (2) during the pre-heating period.

7. The system according to any one of the claims 1 to 6, **characterized in that** the control unit (6, 6') is equipped with a control circuit, a switching logic for heating the hot water storage tank (2) according to the values detected by the storage tank temperature sensor (5), control elements and an actuator for controlling the feeding circuits formed by the photovoltaic device (7) and the alternating voltage source (9).

8. The system according to any one of the claims 1 to 7, **characterized in that** the control unit (6) is equipped with a control circuit that is configured to maximize the power adaption between the photovoltaic device (7) and the at least one second resistive heating rod (4) by continuously evaluating the changes in current/voltage of the photovoltaic device (7) and accordingly actuating a switching means (14).

9. The system according to any one of the claims 1 to 8, **characterized in that** the control unit (6) contains a communication interface (62) for remote queries and/or maintenance as well as display elements (19).

10. The system according to any one of the claims 1 to 9, **characterized in that** the at least one first resistive rod (3, 30), the at least one second resistive heating rod (4, 40), the metal shell of the resistive heating rods (3, 30, 4, 40) and the attachment flange (20) are each insulated in respect of one another.

11. The system according to any one of the preceding claims, **characterized in that** the heating cartridge is mounted in the hot water storage tank (2) by means of a 1.5 inch (38.1 mm) or 1.25 inch (31,75 mm) thread or a 180 mm flange plate.

12. A process for controlling the system according to any one of the claims 1 to 11, wherein the control unit (6, 6') records water temperature values throughout the day, calculates the typical water withdrawal values throughout the day based thereon and pre-heats and, if necessary, additionally heats the hot water storage tank (2) according to the typical water withdrawal values.

13. The process according to claim 12, **characterized in that** the storage tank temperature sensor (5) monitors the water temperature and outputs an error message if a predetermined temperature threshold is exceeded, in particular due to a calcification of the heating cartridge, and **in that** the system is shut down immediately or only after a second temperature threshold has been exceeded.

14. The process for controlling the system according to any one of the claims 1 to 11, wherein the galvanic separation between two feeding circuits which are formed by the photovoltaic device (7) and the alternating voltage source (9) is monitored by means of an insulation test circuit between the at least one first resistive heating rod (4, 40) and the earth potential as well as between the photovoltaic device (7) and the earth potential, and, if insulation resistance falls below a predetermined threshold, the two or only one of the feeding circuits (7, 9) is/are cut off and/or an error message is output via a communication interface (62) for remote queries and/or maintenance and via display elements (19).

## Revendications

1. Système (1) de préparation d'eau chaude, comprenant un réservoir d'eau chaude (2) et au moins une première et au moins une deuxième résistance chauffante (3, 30, 4, 40) pour chauffer l'eau dans le réservoir d'eau chaude (2), et un capteur de température du réservoir (5) et une unité de contrôle (6) au moyen de laquelle ladite au moins une première résistance chauffante (3) peut être raccordée à une source de tension d'alimentation alternative (9), ledit système (1) comprenant un dispositif photovoltaïque pour produire une tension continue (7) et ledit dispositif photovoltaïque (7) étant relié à ladite au moins une deuxième résistance chauffante (4, 40) via ladite unité de contrôle (6) et éventuellement au moins une autre unité de contrôle (6'), ladite au moins une première résistance chauffante (3, 30) et ladite source de tension d'alimentation alternative (9) étant séparées électrolytiquement de ladite au moins une deuxième résistance chauffante (4, 40) et dudit dispositif photovoltaïque (7),
**caractérisé en ce que** ladite au moins une première et ladite au moins une deuxième résistance chauffante (3, 4) sont montées sur une bride de fixation commune (20) et forment une cartouche chauffante (90) qui, à l'état monté, s'étend dans le réservoir d'eau chaude, et **en ce que** ladite unité de contrôle (6) est située dans un boîtier (21) qui est relié à la bride de fixation (20), de préférence sur le côté extérieur du réservoir d'eau chaude, ou est formé d'un seul tenant avec celle-ci.

2. Système selon la revendication 1, **caractérisé en ce que** le réservoir d'eau chaude (2) comprend une zone inférieure et une zone supérieure, ladite au moins une première résistance chauffante (3) étant disposée de manière à produire de la chaleur dans la zone supérieure du réservoir d'eau chaude (2) et ladite au moins une deuxième résistance chauffante (4) étant disposée de manière à produire de la chaleur dans la zone inférieure du réservoir d'eau chaude (2).

3. Système selon la revendication 1 ou 2, **caractérisé en ce qu'**une première cartouche chauffante (90) et une deuxième cartouche chauffante (90') sont chacune formées avec ladite au moins une première résistance chauffante (3, 30), ladite au moins une deuxième résistance chauffante (4, 40) et l'unité de contrôle respectivement
l'autre unité de contrôle (6, 6'), et **en ce que** la première cartouche chauffante (90) est disposée dans une zone supérieure du réservoir d'eau chaude (2) et la deuxième cartouche chauffante (90') est disposée dans une zone inférieure du réservoir d'eau chaude (2), ladite au moins une deuxième résistance chauffante (4) de la première cartouche chauffante (90) et ladite au moins une deuxième résistance chauffante (40) de la deuxième cartouche chauffante (90') pouvant être raccordées au dispositif photovoltaïque (7), ladite première cartouche chauffante (90) étant disposée de manière à produire de la chaleur dans la zone supérieure du réservoir d'eau chaude (2) et la deuxième cartouche chauffante (90') étant disposée de manière à produire de la chaleur dans la zone inférieure du réservoir d'eau chaude (2).

4. Système selon la revendication 3, **caractérisé en ce qu'**il est prévu dans l'unité de contrôle (6) ou dans l'autre unité de contrôle (6') une unité de détection qui est conçue pour surveiller la tension de sortie du dispositif photovoltaïque (7) et pour déterminer, par l'évaluation de cette tension de sortie, que ladite au moins une deuxième résistance chauffante (40) de la deuxième cartouche chauffante (90') est raccordée, l'unité de contrôle (6) et l'autre unité de contrôle (6') comportant des commutateurs commandés (16) qui peuvent être actionnés pour conduire l'énergie solaire du dispositif photovoltaïque (7) principalement vers ladite au moins une deuxième résistance chauffante (4) de la première cartouche chauffante supérieure (90) et ensuite seulement vers ladite au moins une deuxième résistance chauffante (40) de la deuxième cartouche chauffante (90'), et l'unité de contrôle (6) comportant en outre des commutateurs (15) qui peuvent être actionnés pour créer éventuellement de la chaleur supplémentaire au moyen d'au moins une première résistance chauffante (3) de la première cartouche chauffante (90) et de la source de tension d'alimentation alternative (9).

5. Système selon la revendication 3 ou 4, **caractérisé en ce que** l'unité de contrôle (6) et l'autre unité de contrôle (6') sont configurées pour relier le dispositif photovoltaïque (7), lorsqu'il est exposé à la lumière du soleil, par l'intermédiaire des commutateurs commandés (16), soit à l'au moins une deuxième résistance chauffante (4) de la première cartouche chauffante (90), soit à l'au moins une deuxième résistance chauffante (40) de la deuxième cartouche chauffante (90') pendant une période de préchauffage, et **en ce que** l'unité de contrôle (6) et/ou l'autre unité de contrôle (6') est/sont configurée/s pour interrompre la liaison entre le dispositif photovoltaïque (7) et ladite au moins une deuxième résistance chauffante (4, 40) respective, lorsqu'une température maximale est dépassée à l'intérieur du réservoir d'eau chaude (2).

6. Système selon l'une quelconque des revendications 1 à 5, **caractérisé en ce que** l'unité de contrôle (6) est configurée pour raccorder la source de tension d'alimentation alternative (9) via le commutateur (15) à au moins une première résistance chauffante (3) pendant une période de chauffage supplémentaire, le début et la fin de ladite période de chauffage supplémentaire pouvant être commandés en fonction de la température atteinte dans le réservoir d'eau chaude (2) pendant la période de préchauffage.

7. Système selon l'une quelconque des revendications 1 à 6, **caractérisé en ce que** l'unité de contrôle (6, 6') est équipée d'un circuit de réglage, d'une logique de commutation pour chauffer le réservoir d'eau chaude (2) en fonction des valeurs détectées par le capteur de température du réservoir (5), d'éléments de commande et d'un actionneur pour commander les circuits d'alimentation formés par le dispositif photovoltaïque (7) et la source de tension d'alimentation alternative (9).

8. Système selon l'une quelconque des revendications 1 à 7, **caractérisé en ce que** l'unité de contrôle (6) est équipée d'un circuit de commande qui est configuré pour maximiser l'adaptation de puissance entre le dispositif photovoltaïque (7) et ladite au moins une seconde résistance chauffante (4) en évaluant en continu les changements de courant/tension du dispositif photovoltaïque (7) et en actionnant un moyen de commutation (14) en conséquence.

9. Système selon l'une des revendications 1 à 8, **caractérisé en ce que** l'unité de contrôle (6) contient une interface de communication (62) pour les requêtes à distance et/ou la maintenance ainsi que des éléments d'affichage (19).

10. Système selon l'une des revendications 1 à 9, **caractérisé en ce que** ladite au moins une première résistance chauffante (3, 30), ladite au moins une deuxième résistance chauffante (4, 40), l'enveloppe métallique des résistances chauffantes (3, 30, 4, 40) et la bride de fixation (20) sont chacune isolées les unes par rapport aux autres.

11. Système selon l'une des revendications précédentes, **caractérisé en ce que** la cartouche chauffante est montée dans le réservoir d'eau chaude (2) au moyen d'un filetage de 1,5 pouce (38,1 mm) ou de 1,25 pouce (31,75 mm) ou d'une plaque bridée de 180 mm.

12. Procédé pour commander un système selon l'une des revendications 1 à 11, dans lequel l'unité de contrôle (6, 6') enregistre des valeurs de température de l'eau tout au long de la journée, calcule sur cette base les valeurs typiques de prélèvement d'eau tout au long de la journée et préchauffe et, si nécessaire, chauffe de manière supplémentaire le réservoir d'eau chaude (2) en fonction des valeurs typiques de prélèvement d'eau.

13. Procédé selon la revendication 12, **caractérisé en ce que** le capteur de température du réservoir (5) surveille la température de l'eau et émet un message d'erreur en cas de dépassement d'un seuil de température prédéterminé, notamment en raison d'un entartrage de la cartouche chauffante, et **en ce que** le système est arrêté immédiatement ou seulement après le dépassement d'un deuxième seuil de température.

14. Procédé pour commander un système selon l'une quelconque des revendications 1 à 11, dans lequel la séparation électrolytique entre deux circuits d'alimentation qui sont formés par le dispositif photovoltaïque (7) et la source de tension d'alimentation alternative (9) est surveillée au moyen d'un circuit de test d'isolement entre ladite au moins une première résistance chauffante (4, 40) et le potentiel de terre ainsi qu'entre le dispositif photovoltaïque (7) et le potentiel de terre, et, si la résistance d'isolement tombe en dessous d'un seuil prédéterminé, les deux ou
un seul des circuits d'alimentation (7, 9) est/sont coupés et/ou un message d'erreur est émis via une interface de communication (62) pour les interrogations à distance et/ou la maintenance ainsi que par des éléments d'affichage (19).
